Europäisches Patentamt

European Patent Office

Office européen des brevets

(11) Publication number: **0 073 519**
**B1**

(12) **EUROPEAN PATENT SPECIFICATION**

(45) Date of publication of patent specification: 02.11.88

(21) Application number: 82108012.4

(22) Date of filing: 31.08.82

(51) Int. Cl.⁴: **G 11 B 7/00,** G 11 B 27/34,
G 11 B 27/36

(54) Optical disc player.

(30) Priority: 31.08.81 JP 136844/81

(43) Date of publication of application:
09.03.83 Bulletin 83/10

(45) Publication of the grant of the patent:
02.11.88 Bulletin 88/44

(84) Designated Contracting States:
AT DE FR GB IT NL SE

(56) References cited:
DE-A-2 326 898
DE-A-2 851 822
US-A-3 585 619
US-A-4 145 758
JOURNAL OF THE AUDIO ENGINEERING
SOCIETY, vol. 29, nos. 1/2, January/February
1981, pages 60-66, New York, USA. T.T. DOI:
"General information on a compact digital
audio disk", page 64, chapter 6: "Error-
correction system"
JOURNAL OF THE AUDIO ENGINEERING
SOCIETY, vol. 27, no. 12, December 1979,
pages 975-981, New York, USA. T.T. DOI et al:
"A long-play digital audio disk-system"
J. Audio Eng. Soc. Vol. 29, No 1/2 1981, page
58-78

(73) Proprietor: SONY CORPORATION
7-35 Kitashinagawa 6-Chome Shinagawa-ku
Tokyo 141 (JP)

(72) Inventor: Tsurushima, Katsuaki
2444-65, Ohzenji Tama-ku
Kawasaki-shi Kanagawa-ken (JP)
Inventor: Furuya, Rsuneo
2-19-8, Kamiogi Suginami-ku
Tokyo (JP)
Inventor: Fukami, Tadashi c/o Bukko Danchi
14-305, 895, Bukko-cho Hodogaya-ku
Yokohama-shi Kanagawa-ken (JP)

(74) Representative: Patentanwälte TER MEER -
MÜLLER - STEINMEISTER
Mauerkircherstrasse 45
D-8000 München 80 (DE)

## Description

This invention relates to an optical disc player as defined in the preamble of claim 1. Such a disc player is known from Journal of the Audio Engineering Society Vol. 29, No 1—2, 1981, p. 58—66.

### Description of the Prior Art

In an optical disc player which reproduces information data such as video signals, digital audio signals and so on from an optical disc by laser beam scanning, the disc is provided with a protective layer on the surface forming the information signal as pits or bumps. Since scanning laser beam is brought into focus on the information surface, relatively small dust particles, defects or scars on the protective layer are out of focus of the laser beam so as not to influence the reproduced signals.

When there are, however, such dust areas or scars that influence or obstruct larger portions across the path of the laser beam on the protective layer, the reproduced signal is seriously distorted or damaged. In case that a digital audio signal is recorded on the disc, the drop out of the signal causes unacceptable noise in the reproduced sound.

### Objects and Summary of the Invention

Therefore, an object (the aim) of this invention is to provide an optical disc player which can be simply constructed and which gives an indication in respect to obstructions such as dust or scars on the surface of the disc.

The technical solution according to the invention is defined by the features of claim 1.

Advantageous additional features and/or specific embodiments of the invention are the subject of dependant claims and are described in the following.

The invention is also based on the use of an error correcting code as described in the beforementioned article, to indicate the obstructions on the disc.

The other objects, features and advantages of this invention will be apparent from the following description taken in conjuction with the accompanying drawings.

### Brief Description of the Drawings

Fig. 1 is a schematic diagram showing an optical disc player system for explanating this invention.

Fig. 2 is a schematic block diagram showing an embodiment of the optical disc player according to this invention.

### Description of the Preferred Embodiments

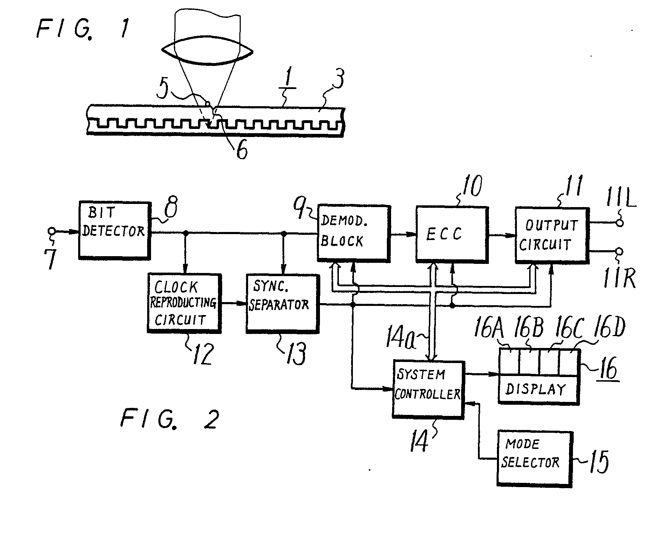

Referring now to Fig. 1, an optical disc 1 with a previously recorded information signal, which by way of example may be a digital signal including an error correcting code, has an information layer 2 constructed of a reflector and a protective layer 3 formed of transparent resin or the like and laminated on the information layer 2.

In an optical disc player system, the surface of the information layer 2 is scanned by a laser beam 4, for instance, and from the reflected beam a reproduction signal is obtained. Even when a dust particle 5 or scars 6 are present on the surface of the protective layer 3, the reproduced signal is not influenced by such dust particles 5 or scars 6, if relatively small since the laser beam is out of focus in the plane of the outer surface of the protective layer 3. Nevertheless when the dust particles 5 or scars 6 are large enough to influence or obstruct larger areas across the path of the laser beam 4, the reproduced signal is seriously distorted or damaged.

Referring to Fig. 2, an optical disc player according to an embodiment of this invention is now described.

An electric signal, which is converted from an optical signal reproduced from the optical disc 1 by an optical pickup device (not shown), is supplied to an input terminal 7. The input signal is a digital information signal containing an error detecting and error correcting code for example a Cyclic Redundancy Code (CRCC) or a Reed-Solomon Code, which is described in the beforementioned article. The digital signal from the input 7 is supplied to a bit detection circuit 8 which includes a wave form shaping circuit and produces a bit information signal. The output signal from the bit detection circuit 8 is provided to a demodulation block 9 which converts the bit information signal to an original binary data signal to be supplied to an error detecting and error correcting circuit 10.

The error detecting and error correcting circuit 10 operates the binary data by the error detecting and error correcting code in one error correcting block so as to produce the corrected data or the uncorrected data with an error pointer bit indicating that a respective part of the data is bad and a 2 bit condition flag data indicating the result of correcting operation in the error correcting block as follows:

(1) No error to be corrected.
(2) One word corrected.
(3) Two words corrected.
(4) Correction impossible.

At the outputside of the error detecting and correcting circuit 10 the corrected or interpolated data, if the data was uncorrected is supplied to an output circuit 11 which inludes, in case that the data is a PCM stereo audio signal, a left and right signal separating circuit, a pair of digital to analogue converting circuits and a pair of low pass filters being connected to left and right output terminals 11L and 11R, respectively.

The output signal from the bit detection circuit 8 is also supplied to a clock signal reproducing circuit 12 and a synchronizing signal separating circuit 13. The clock signal reproducing circuit 12 extracts a bit clock signal from the reproduced bit information signal which is supplied to the synchronizing signal separating circuit 13, in which various timing signals such as synchronizing signal are generated. The various timing signals are supplied to the demodulation block 9, to the error detecting and error correcting circuit 10 and to output circuit 11 as a timing signal, respectively.

A system control circuit 14 generates control signals corresponding to various functions for example, PLAY, STOP, VOLUME CONTROL and so on, selected by a mode selector 15 so as to control various circuits by the control signals through a bus line 14a.

In this embodiment, the error pointer bit or the 2-bit condition flag data from the error detecting and error correcting circuit 10 is supplied through the system control circuit 14 to a display equipment 16 which indicates a condition of obstruction at the laser beam scanning area such as dust 5 or scar 6. The display equipment 16 has four light emitting devices 16A, 16B, 16C and 16D. The device 16A turns on so as to indicate the condition "excellent" when the condition flag data showing "1" = "No error" to be corrected is derived. The device 16B turns on so as to indicate the condition of "well" when the condition flag data shows "2" = "one word corrected". The device 16C turns on so as to indicate the condition of "passing" when the condition flag data shows "3" = "Two words corrected". And finally, the device 16D turns on so as to indicate that the disc 1 should be replaced or at least should be cleaned when the condition flag data shows "4" = "Correction impossible".

The other parts are constructed similar as with a conventional optical disc player of this type.

When there are dust particles 5 or scar 6 on the optical disc 1 obstructing the laser beam 4, errors occur in the reproduced signal supplied to the input terminal 7, the number of which corresponds to the size of the obstructions. Accordingly, the condition or size of the obstructions like the dust particles 5 or scars 6 on the optical disc 1 are indicated by means of the error correcting condition flag data. When the light emitting device 16D of the display 16 is turned on due to stain like dust, it is an indication to the user of the disc player to clean the surface of the disc 1, e.g. with alcohol.

Although the above embodiment is described to indicate four types of conditions it is also possible to provide only one light emitting device so as to optically indicate only the condition "4" = "Correction impossible". In this case, the optical disc 1 must be always cleaned when the light emitting device is turned on.

The error pointer bit indicating bad or good is also employed as error condition information.

## Claims

1. An optical disc player comprising:
— a driving means for rotating an optical disc (1) carrying recorded information data thereon,
— an optical pickup means (4) for obtaining said information data as optical information from said optical disc (1), said optical disc including
— an information layer (2) representing said information data and redundant check data forming an error detecting and/or error correcting code, and
— a protective layer (3) formed of transparent material and laminated on said information layer (2),
— converting means for converting said optical information to an electric signal,
— detecting means (8 to 14) for detecting the condition of said electrical signal and producing a detecting signal, characterized by
— indicating means (16) in the player for indicating to the user the presence of errors of said information data resulting e.g., from stain or dust by using said error detecting and/or error correcting code.

2. The optical disc player according to claim 1, wherein said detecting means (8 to 14) produces a pointer bit to be supplied to said indicating means (16) when the existence of an error condition is detected in said information data.

3. The optical disc player according to claim 2, wherein said error detecting and/or error correcting code is capable of detecting N words error and to correcting M words error (M<N) and said detecting means detects the condition of "correction impossible" to produce a detecting signal indicating this condition.

4. The optical disc player according to claim 2, wherein said error correcting code is such a kind of code that a two words error is correctable and said detecting means detects four types of conditions of correction which are "no errors", "one word corrected", "two words corrected" and "correction impossible" and to produce corresponding detecting signals to be supplied to four display devices (16A to 16D).

## Patentansprüche

1. Optischer Plattenspieler mit
— einer Antriebseinrichtung für eine mit Informationsdaten beschriebene, optisch abzutastende Platte (1),
— einer optischen Abtasteinrichtung (4) zur Gewinnung der Informationsdaten als optische Information von der Platte (1), welche
— eine die Informationsdaten und redundante Prüfdaten in Form eines Fehlerentdeckungs- und/oder Fehlerkorrekturcodes enthaltende Informationsschicht (2) und
— eine über der Informationsschicht (2) aufgebrachte Schutzschicht (3) aus einem lichtdurchlässigen Material aufweist,
— einer Umsetzereinrichtung, zur Umwandlung der optischen Information in ein elektrischen Signal, und mit
— einer Abtasteinrichtung (8 bis 14) zur Uberprüfung des elektrischen Signals und zur Erzeugung eines Abtastsignals, gekennzeichnet durch
— eine den Gerätebenutzer informierende Anzeigevorrichtung (16) in dem Plattenspieler zur Anzeige von Fehlern in den Informationsdaten aufgrund von Flecken oder Staub auf der Platte unter Verwendung des Fehlererkennungs- und/oder Fehlerkorrekturcodes.

2. Optischer Plattenspieler nach Anspruch 1, bei dem die Abtastinrichtung (8 bis 14) ein Zeiger-Bit erzeugt, das der Anzeigevorrichtung (16) zugeführt wird, wenn in den Informationsdaten eine Fehlerbedingung festgestellt worden ist.

3. Optischer Plasttenspieler nach Anspruch 2, bei dem der Fehlererkennungs- und/oder Fehlerkorrekturcode in der Lage ist, N Wortfehler zu erkennen und M Wortfehler zu korrigieren (M<N) und bei dem die Abtastvorrichtung die Bedingung "Korrektur unmöglich" feststellt und ein diese festgestellte Bedingung anzeigendes Signal liefert.

4. Optischer Plattenspieler nach Anspruch 2, bei dem ein Fehlerkorrekturcode verwendet wird, mit dem sich zwei Wortfehler korrigieren lassen und bei dem die Abtasteinrichtung vier Arten von Korrekturbedingungen feststellt, nämlich die Bedingungen "Keine Fehler", "Ein Wort korrigiert", "Zwei Worte korrigiert" und "Korrektur unmöglich" und die entsprechenden Abtastsignale vier Anzeigevorrichtungen (16A bis 16D) zuführt.

## Revendications

1. Lecteur de disque optique comprenant:
— un dispositif d'entraînement destiné à faire tourner un disque optique (1) portant des données enregistrées d'information,
— un dispositif à capteur optique (4) destiné à tirer des données d'information sous forme d'information optique provenant du disque optique (1), le disque optique comprenant:
— une couche (2) d'information représentant les données d'information et des données redondantes de vérification formant un code de détection d'erreurs et/ou de correction d'erreurs, et
— une couche protectrice (3) formée d'un matériau transparent et collée à la couche d'information (2),
— un dispositif de transformation de l'information optique en un signal électrique, et
— un dispositif de détection (8 à 14) destiné à détecter l'état du signal électrique et à créer un signal de détection,
— caractérisé par un dispositif indicateur (16) placé dans le lecteur et destiné à indiquer à l'utilisateur la présence d'erreurs des données d'information résultant par example de taches ou de poussière, par utilisation du code de détection d'erreurs et/ou de correction d'erreurs.

2. Lecteur de disque optique selon la revendication 1, dans lequel le dispositif de détection (8 à 14) crée un bit formant pointeur destiné au dispositif indicateur (16) lorsque l'existence d'une condition d'erreur est détectée dans les données d'information.

3. Lecteur de disque optique selon la revendication 2, dans lequel le code de detection d'erreurs et/ou de correction d'erreurs peut détecter une erreur sur N mots et corriger une erreur sur M mots (M<N) et le dispositif de détection détecte la condition de correction impossible afin qu'il crée un signal de détection indiquant cette condition.

4. Lecteur de disque optique selon la revendication 2, dans lequel le code de correction d'erreurs est d'un type tel qu'une erreur sur deux mots peut être corrigée, et le dispositif de détection détecte quatre types de conditions de correction qui sont "pas d'erreur", "un mot corrigé", "deux mots corrigés" et "correction impossible" et crée des signaux correspondants de détection destinés à parvenir à quatre dispositifs d'affichage (16A à 16D).

FIG. 1

FIG. 2